Europäisches Patentamt

European Patent Office

Office européen des brevets

(11) Veröffentlichungsnummer: **0 502 197 A1**

(12) **EUROPÄISCHE PATENTANMELDUNG**
**veröffentlicht nach Art. 158 Abs. 3**
**EPÜ**

(21) Anmeldenummer: **91915496.3**

(22) Anmeldetag: **23.08.91**

(86) Internationale Anmeldenummer:
**PCT/SU91/00171**

(87) Internationale Veröffentlichungsnummer:
**WO 92/03723 (05.03.92 92/06)**

(51) Int. Cl.⁵: **G01N 29/00**, G01L 9/08

(30) Priorität: **24.08.90 SU 4861972**
**30.05.91 SU 4937760**

(43) Veröffentlichungstag der Anmeldung:
**09.09.92 Patentblatt 92/37**

(84) Benannte Vertragsstaaten:
**DE FR GB IT NL**

(71) Anmelder: **VSESOJUZNY NAUCHNO-ISSLEDOVATELSKY INSTITUT PRIRODNYKH GAZOV (VNIIGAZ)**
**Leninsky raion, Moskovskaya obl.,**
**pos. Razvilka 142717(SU)**

(72) Erfinder: **SARVAZIAN, Armen Poruirovich,**
**mikroraion"AB",9-36**
**Serpukhovsky raion Moskovskaya obl.**
**Puschino na Oke, 142292(SU)**
Erfinder: **BELONENKO, Vladimir Nikolaevich,**
**pos. Razvilka, 10-6**
**Leninsky raion Moskovskaya obl.,**
**142717(SU)**
Erfinder: **CHALIKIAN, Tigran Vanikovich**
**pr. Azatunian, 1-28**
**Erevan, 375037(SU)**

(74) Vertreter: **Nix, Frank Arnold, Dr.**
**Kröckelbergstrasse 15**
**W-6200 Wiesbaden(DE)**

(54) **VERFAHREN UND VORRICHTUNG ZUR BESTIMMUNG VON PHYSIKALISCHEN ZUSTANDSPARAMETERN EINES MEDIUMS.**

(57) Das vorgeschlagene Verfahren zur Bestimmung physikalischer Zustandsparameter von Medien besteht darin, daß bei Messungen physikalischer Eigenschaften verschiedener Medien Schwingungen in einem Eichmediumelement erregt werden, darauf die Abhüngigkeit einer der Kennlinien des Schwingvorganges von dem zu errechnenden Parameter ermittelt, ein Kontakt des Eichmediumelementes zu dem zu untersuchenden Medium hergestellt wird, dann erneut Schwingungen in dem genannten Element erregt werden, während die Größe des zu ermittelnden Zustandsparameters des zu untersuchenden Mediums anhand der Änderung der Kennlinie des Schwingvorgangs in dem Eichmediumelement festgestellt wird. Es werden modu-lierte, Ultraschalloder Hyperschallschwingungen erregt. Als zu messende Kennlinien werden Resonanzfrequenz oder Gütefaktor, Durchgangsgeschwindigkeit der Schwingungen oder Schwingungsschluckkoeffizient benutzt, es wird die Relaxationsfrequenz des Eichmediums ermittelt und die Zustandsparameter des zu untersuchenden Mediums werden beispielsweise anhand der Verschiebung der Relaxationsfrequenz bestimmt. Als Eichmedium dient ein flüssiges, ein magnetorheologisches und ein elektrorheologisches Medium.

Die Vorrichtung zur Durchführung des obigen Verfahrens weist einen Hohlgrundkörper (21) mit einer Öffnung (22) in seiner Wand, an seinen Stirnenden befestigte Umwandler (23) akustischer Schwingungan mit Elektroden (24, 25), die mit dem Grundkörper (21) eine Meßkammer (26) bilden, und Befestigungselemente (27) auf. Jeder Umwandler (23)

akustischer Schwingungen ist im Umriß zwischen dem Stirnende des Grundkörpers (21) und einem Befestigungselement (27) starr befestigt. Die mit dem zu untersuchenden Medium kontaktierende Oberfläche jedes Umwandlers (23) akustischer Schwingungen ist als eine Ganzelektrode (25) koaxial mit der Meßkammer (26) gestaltet und fällt mit ihr nach dem Durchmesser zusammen.

Im Grundkörper können mehrere Meßkammern angeordnet sein.

FIG 5

Bereich der Technik. Die vorliegende Erfindung bezieht sich auf die Erdöl- und Erdölchemieindustrie sowie auf den chemischen Bereich der Technik, wo es erforderlich ist, physikalisch-chemische Eigenschaften von flüssigen Medien, vorzugsweise Druck, Temperatur, magnetische Feldstärke u.a.m., durch Erregen von Schwingungen im jeweiligen Medium zu bestimmen oder zu kontrollieren.

Bekannter Technikstand. Bekannt ist ein Verfahren zur Messung des Drucks durch Anlegen einer Bezugsspannung an den Eingang eines empfindlichen piezoelektrischen Elementes und durch die Bestimmung des Übersetzungsverhältnisses des Elementes in Abhängigkeit von dem an das Element angelegten Druck beim Betrieb auf einer Resonansfrequenz (SU. A1. 317931).

Bekannt ist ferner ein Verfahren zur Kontrolle physikalischer Parameter von Flüssigkeiten durch Erregen von Schwingungen in dem zu kontrollierenden Medium, durch den Empfang der durch das Medium passierenden Signale und durch die Bestimmung des Druckwertes anhand deren Kennwerte (SU. A1. 456996).

Bekannt ist außerdem eine Vorrichtung zur Ultraschall-Kontrol le biologischer Flüssigkeiten, die einen Grundkörper mit einem durchgehenden Kanal, eine darin angeordnete Meßkammer und an deren entgegengesetzten Wänden koaxial angeordnete Ultraschallschwingungsumwandler aufweist (SU. A1. 932389).

Ein Nachteil der bekannten Verfahren und Vorrichtungen besteht in ihrer Empfindlichkeit und Meßpräzision sowie in der Unmöglichkeit, sie in einem breiten Druck- und Temperaturbereich wegen einer nicht starren Befestigung der Ultraschallschwingungsumwandler zwischen den Grundkörperenden und -deckeln mit Blick auf die vorhandenen federnden Einlagen zwischen der unbelasteten Oberfläche der Piezoumwandler und den Befestigungselementen zu verwenden.

Die niedrige Meßgenauigkeit ist außerdem dadurch bedingt, daß die Elektroden auf den Oberflächen der Piezoplatten auf deren für das zu untersuchende Medium unbelasteten Flächen mit dem Durchmesser der Meßkammer nicht zusammenfallen, was eine Fortpflanzung der Ultraschallwellen nicht nur in dem zu untersuchenden Medium, sondern auch im Körper der Meßkammer zur Folge hat.

Offenbarung der Erfindung. Der vorliegenden Erfindung wurde die Aufgabe zugrunde gelegt, ein Verfahren zur Bestimmung physikalischer Zustandsparameter von Medien und eine Vorrichtung zu dessen Durchführung zu vervollkommnen, deren Bauart es ermöglicht, ihre funktionellen Einsatzmöglichkeiten zu erweitern und die Meßpräzision in einem breiten Druck- und Temperaturbereich zu erhöhen.

Dieses Ziel wird dadurch erreicht, daß im Verfahren zur Bestimmung von Zustandsparametern eines Mediums durch Erregen von Schwingungen, Messen der Kennwerte des Schwingungsvorgangs und Bestimmen daraus der Größe des zu ermittelnden Parameters die Schwingungen in einem Element eines Eich- bzw. Vergleichsmediums erregt werden, ein Kontakt des Vergleichselementes zu dem zu untersuchenden Mediums hergestellt wird, Schwingungen in dem Element wiedererregt werden und die Größe des zu ermittelnden Zustandsparameters des Prüfmediums je nach der Änderung der Kennlinie des Schwingvorganges im Element des Bezugsmediums ermittelt wird. Darüber hinaus werden modulierte Schwingungen erregt.

Als zu messende Kennlinien des Schwingvorgangs benutzt man die Resonanzfrequenz und/oder den Absorptionsfaktor, die Durchgangsgeschwindigkeit und/oder den Gütefaktor und ermittelt die Relaxationsfrequenz des Eichmediums, dabei wird der Zustandsparameter des zu untersuchenden Mediums anhand der Relaxationsfrequenzverschiebung bestimmt.

In dem Eichmediumelement werden Ultraschall-, Hyperschall- und elektromagnetische Höchstfrequenzschwingungen erregt.

Als nach Parametern dem zu untersuchenden Medium entsprechendes Eichmediumelement finden flüssige Medien Verwendung. Außerdem wird ein elektrorheologisches und ein magnetorheologisches Medium verwendet.

Ein Eichmedium wählt und/oder modelliert man mit einer linearen Abhängigkeit der Geschwindigkeit der Schwingungsfortpflanzung von der Temperatur und/oder mit einer linearen Abhängigkeit des Elastizitätsmoduls vom Druck.

Das Eichmediumelement wird in Abhängigkeit von dem zu untersuchenden Medium ausgewählt bzw. modelliert, d. h. von dessen Eigenschaften, Aggregatzustand, Bedingungen und Aufgaben der Untersuchung, sowie von dem zu ermittelnden Zustandsparameter des Mediums (z. B. vom Druck, Temperatur oder vom spezifischem Volumen) und von der Art der Änderung der physikalischen Eigenschaften. Das Eichmedium wird mit Blick auf die vorgegebene (maximale) Empfindlichkeit für den zu ermittelnden Parameter ausgewählt. Das ermöglicht es, verschiedene Zustandsparameter in einem breiten Bereich ihrer Änderungen zu ermitteln und verschiedene Medien hochpräzis zu untersuchen.

Die Verwendung von Schwingvorgängen bei der Ermittlung von Zastandsparametern aufgrund des vorliegenden Verfahrens ermöglicht es, neben Zustandsparametern, beispielsweise Druck, gleichzeitig und unter Verwendung derselben Kontrollmeßapparatur physikalische Eigenschaften eines Mediums, z. B. Elastizitätsmodul und Viskosität, zu ermitteln. Dadurch wird es möglich, optimale Bedingungen bei Messungen zu gewährleisten und Leistung des Verfahrens zu erhöhen. Durch das Modulieren der Schwingungen läßt sich die Meßpräzision bei Hochfrequenzen und bei kleinen Abmessungen des Eichmediumelementes erhöhen. Die Gestaltung des Elementes als ein Resonator und die Bestimmung der Resonanzfrequenz der Schwingungen erlauben es, die Meßpräzision zu steigern, denn die Frequenz der Resonanzschwingungen wird hochpräzis ermittelt.

Zur Durchführung der Untersuchungen in Gasen wird auch/oder der Gütefaktor benutzt, was es ermöglicht, den Meßbereich zu erweitern, z. B. bei Druckermittlung bis zu einem Tiefvakuum.

Die Verwendung der Schluckungsgeschwindigkeit und/oder des Absorptionskoeffizienten der Schwingungen als zu messende Kennwerte des Schwingvorganges ermöglicht es einerseits, die Empfindlichkeit des Verfahrens zu erhöhen, weil sich der Absorptionskoeffizient sogar bei kleinen Änderungen ($10^{-2}$% und weniger) zum Beispiel der Konzentrationen einer gelösten Substanz wesentlich wandeln kann,und andererseits optimale Bedingungen und Leistung bei Messungen physikalischer Eigenschaften von Medien unter Verwendung von Schwingungsvorgängen zu erzielen, denn anhand der Geschwindigkeit der Schwingungsfortpflanzung lassen sich sowohl elastische Eigenschaften, z. B. Verdicht barkeit, als auch Druck und anhand der Absorption auch dissipative Eigenschaften (z. B. Viskosität) wie auch beispielsweise Druck messen.

Die Durchführung der Messungen bei verschiedenen Frequenzen macht es möglich, gute Ergebnisse dadurch zu erzielen, daß man z. B. beim Messen der Absorption in Abhängigkeit von der Schwingungsfrequenz die Relaxationsfrequenz des Eichmediums ermittelt und die Änderung der Zustandparameter anhand der Verschiebung dieser Relaxationsfrequenz, z. B. unter der Einwirkung des Drucks, verfolgt. Als Eichmediumelement verwendet man eine Flüssigkeit mit einer durch ein zwischen den Dimeren und Monomeren zustande gekommenes Gleichgewicht bedingten Relaxation, oder eine Flüssigkeit mit einem intramolekularen Relaxationsprozeß (drehbar-isomere Relaxation). Für solche Flüssigkeiten hängt die Relaxationsfrequenz nicht vom Druck ab, ändert sich aber mit der Änderung der Temperatur. Dadurch lassen sich Druckänderungen an Geschwindigkeitserhöhungen der Schwingungsfortpflanzung und die Temperatur an Werten von $\alpha/f^2$ (oder $\alpha/f$, wo $\alpha$ Absorptionskoeffizient und f Frequenz bedeuten) gleichzeitig ermitteln.

Die Erregung von Ultraschallschwingungen ermöglicht es, die Präzision und Empfindlichkeit des vorliegenden Verfahrens zu erhöhen, was durch die Frequenzwerte der erregten Schwingungen, große Werte der Ultraschallabsorption, Wellenlängen sowie dadurch bedingt ist, daß viele Medien im Ultraschallfrequenzbereich realaxieren. Außerdem ermittelt man mit Hilfe von Ultraschallmethoden gleichzeitig physikalische Eigenschaften von Medien, z. B. den Verdichtbarkeitsfaktor. Das ermöglicht es, einen Satz von Apparatur zur Ermittlung von Zustandsparametern und von physikalischen Eigenschaften von Medien zu gebrauchen.

Die Erregung von Hyperschallschwingungen ermöglicht es ebenfalls, die Präzision und Empfindlichkeit des Verfahrens zu erhöhen, die Abmessungen des Eichmediumelementes kleinstzuhalten, an dünnen Filmen und Schichten zu messen, was die Einsatzmöglichkeiten des Verfahrens erweitert.

Durch Verwendung eines flüssigen Mediums als Eichmedium erhöht sich die Präzision und Empfindlichkeit des Verfahrens, denn dabei werden große Änderungen der Geschwindigkeit des Durchgangs und der Absorption der Schwingungen je nach Druck und Temperatur möglich. Das bedingt seinerseits einen Bereich der Frequenzänderungen, z. B. des Resonators und des Gütefaktors, und ist bei, Messungen in flüssigen Medien optimal.

Die Verwendung eines magnetorheologischen und/oder elektrorheologischen Mediums ermöglicht es, die Empfindlichkeit des vorliegenden Verfahrens zu erhöhen und präzise Messungen von Parametern des Mediumzustands und von Kennwerten des Mediums bei einem vorhandenen magnetischen und elektromagnetischen Feld durchzuführen.

Die Auswahl und/oder das Modellieren eines Eichmediums mit linearer Abhängigkeit der Fortpflanzungsgeschwindigkeit der Schwingungen von der Temperatur begünstigt die Präzision des Verfahrens bei der Ermittlung der Temperatur des zu untersuchenden Mediums und die Erzielung optimaler Bedingungen bei Messungen physikalischer Eigenschaften, weil es dabei möglich wird, lediglich zwei Vergleichspunkte auf der Abhängigkeitsgeraden der Geschwindigkeit von der Temperatur zu ermitteln.

Ähnlich Ziele sind bei der Ermittlung des Drucks mit Hilfe eines Eichmediumelementes mit linearer Abhängigkeit des Elastizitätsmoduls vom Druck erreichbar.

Zur Realisierung des vorliegenden Verfahrens weist eine Vorrichtung zur Ermittlung physikalischer Parameter des Mediumzustands einen Hohlgrundkörper mit Öffnungen in seinen Wänden, ferner an seinen Stirnenden befestigte Umwandler akustischer Schwingungen, die zusammen mit dem Hohlkörper eine Meßkammer bilden, sowie Befestigungselemente auf. Jeder der genannten Umwandler akustischer Schwingungen ist an seinem Umfang zwischen dem Stirnende des Hohlkörpers und dem Befestigungselement starr befestigt, dabei ist die mit dem zu untersuchenden Medium kontaktierende Oberfläche jedes Umwandlers als eine Ganzelektrode gestaltet, während auf der Gegenoberfläche jedes Umwandlers die Elektrode mit der Meßkammer koaxial ist und mit ihr nach dem Durchmesser zusammenfällt.

Das genannte Ziel wird ebenfalls dadurch erreicht, daß in dem Hohlkörper mehrere Meßkammern angeordnet werden können, deren Elektroden an den für alle Kammern gemeinsamen Umwandlern akustischer Schwingungen ausgebildet sind.

Die Meßkammern sind zur Längsachse des Grundkörpers symmetrisch und hintereinander auf einer Linie angeordnet, dabei können ihre akustischen Basen unterschiedlich sein.

Die Meßkammern sind von dem Außenmedium durch eine elastische Trennwand isoliert, und eine der Meßkammern ist mit dem Eichmedium gefüllt.

In jedem der Befestigungselemente sind symmetrisch im Umkreis Regulierschrauben und im Perimeter jedes Umwandlers akusticher Schwingungen je ein Dichtungs- und ein Andruckring angeordnet.

Zur Messung der Kennwerte von Medien bei hohen Drücken ist die vorliegende Vorrichtung in einen Autoklav zu bringen.

Erweiterte Einsatzmöglichkeiten und erhöhte Meßpräzision in breiten Bereichen von Druck und Temperatur sind durch die starre Befestigung jeder der Piezoplatten am Umfang zwischen dem Stirnende des Grundkörpers und dem Befestigungselement erreicht.

Durch die Koaxialität der Elektrode mit der Meßkammer und ihre Durchmesserübereinstimmung ist eine Erregung von Ultraschallwellen lediglich in dem die Meßkammer füllenden Medium gewährleistet, wodurch sich die Meßgenauigkeit ebenfalls erhöht.

Die Anordnung mehrerer Meßkammern im Grundkörper, deren Elektroden auf den für alle Meßkammern gemeinsamen Piezoplatten ausgebildet sind, ermöglicht es, Kennwerte von mehreren Prüfproben, z. B. von Lösungen unterschiedlicher Konzentrationen, gleichzeitig zu messen. Das erweitert ebenfalls die funktionellen Möglichkeiten der vorliegenden Vorrichtung und erhöht die Meßgenauigkeit, denn sämtliche Prüfproben befinden sich in identischen Verhältnissen.

Die symmetrische Anordnung der Meßkammern zur Längsachse des Grundkörpers begünstigt die Meßgenauigkeit, weil durch die Symmetrie die Temperaturgradienten zwischen den in den gleichen Temperaturverhältnissen befindlichen Meßkammern minimal werden. Die Anordnung der Meßkammern hintereinander auf einer Linie ermöglicht es, die Anzahl der zu messenden Prüfproben zu vergrößern und gleichzeitig den Druckbereich mit Verringerung des Außendurchmessers des Hochdruckbehälters (Autoklav) zu erweitern, was die Einsatzmöglichkeiten der Vorrichtung ebenfalls vergrößert.

Die Isolierung der Meßkammern von dem Außenmedium durch eine elastische Trennwand trägt zu erweiterten funktionellen Möglichkeiten der Vorrichtung ebenfalls bei, denn solch eine Isolierung gestattet es, unterschiedliche Flüssigkeiten in die Meßkammern einzubringen und sie von der Flüssigkeit außerhalb der Vorrichtung, welche den Druck überträgt, oder von einer thermostatierenden Flüssigkeit zu trennen.

Die Anfüllung einer der Meßkammern mit dem Eichmedium hat eine erhöhte Meßgenauigkeit zur Folge, denn es wird dadurch möglich, die Meßergebnisse anhand der Kennwerte des Eichmediummusters nachzuprüfen. Gleichzeitig kann die mit dem Eichmedium gefüllte Meßkammer auch als Druck- und/oder Temperaturgeber dienen.

Die in jedem Befestigungselement symmetrisch im Umkreis angebrachten Regulierschrauben begünstigen eine beste Abstimmung zur Parallelität der Umwandler akustischer Schwingungen und dadurch eine erhöhte Meßpräzision.

Der Dichtungs- und der Andruckring im Perimeter jedes der Umwandler akustischer Schwingungen sichern eine gute Dichtung.

Kurze Beschreibung der Zeichnungen. Die vorliegende Erfindung wird nachstehend anhand konkreter Ausführungsbeispiele und der beigelegten Zeichnungen veranschaulicht.

Fig. 1. Schema der Vorrichtung zur Verwirklichung des vorliegenden Verfahrens mit einem flüssigen Eichmedium.

Fig. 2. Ein elektronisches Blockschema der Vorrichtung zu Präzisionsmessungen.

Fig. 3. Schema der Vorrichtung mit vier Resonator-Ultrasschallkammern in einem gemeinsamen Grundkörper.

Fig. 4. Eineschematische Darstellung der Meßoperationen bei Hochdruckwerten.

Fig. 5. Aufbau der Vorrichtung zur Ermittlung akustischer Kennlinien von Medien.

Fig. 6. Fig. 5 in Draufsicht.

Fig. 7. Schnitt VII-VII in Fig. 5 für eine Variante der Vorrichtung mit vier Meßkammern im Gerätegehäuse.

Fig. 8. Umwandler in Fig. 7 in Draufsicht.

Fig. 9. Schnitt IX-IX in Fig. 8.

Fig. 10. Bauteil B in Fig. 5.

Fig. 11. Reihenanordnung der Meßkammern.

Fig. 12. Ein Schema der Vorrichtung zur Bestimmung der Temperatur einer Metalloberfläche.

Beste Variante der Ausführung der Erfindung. Die Verwirklichung des vorliegenden Verfahrens läßt sich durch die Wirkungsweise der Vorrichtung zur Durchführung des Verfahrens veranschaulichen.

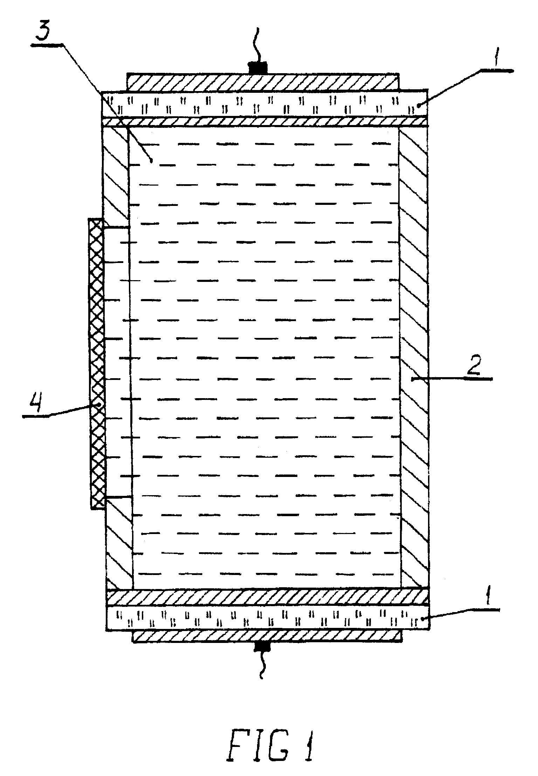

Die in Fig. 1 dargestellte Vorrichtung weist zwei zueinander parallel an den Stirnenden des Grundkörpers 2 angeordnete Umwandler 1 auf. Der Grundkörper ist mit einer Eichflüssigkeit 3 (Eichmediumelement) gefüllt und von dem Außenmedium durch eine elastische Trennwand 4 isoliert.

Im Eichmedium 3 werden akustische Sinusschwingungen erregt, die je nach Erfordernissen und Bedingungen unterschiedliche Frequenzen, unter anderem Ultra- oder Hyperschallfrequenzen, haben. Man ermittelt ihre Resonanzfrequenz und/oder den Gütefaktor bei bestimmter Temperatur und atmosphärischem Druck. Dann wird die Voreinem den. Druck auf das. Eichmediumelement übertragenden richtung in einen beispielsweise mit/Gas angefüllten Behälter eingebracht, und man bestimmt die Abhängigkeit der Resonanzfrequenz und/oder des Gütefaktors vom Druck und/oder z. B. vom Verdünnungsgrad, falls es gilt, die Vorrichtung als Vakuummesser zu verwenden. Nachdem eine Abhängigkeit der akustischen Kennwerte von den erforderlichen Zustandsparametern für die ausgewählte bzw. modellierte Eichflüssigkeit ermittelt ist, wird die Vorrichtung als Druckgeber (oder zum Beispiel als Temperaturgeber, falls sich eine Abhängigkeit der akustischen Eigenschaften des Eichmediumelementes von der Temperatur herausstellt) verwendet. Zur Durchführung von Messungen in einem zu untersuchenden Medium wird die Vorrichtung in einen Hochdruckbehälter eingebracht, der mit der Flüssigkeit angefüllt ist, in welcher der Druck ermittelt werden muß. Bei Änderungen des Drucks in der zu untersuchenden Flüssigkeit wird sich auch die Reaktion der Eichflüssigkeit ändern, diese Reaktion überträgt sich auf die Flüssigkeit durch die Einwirkung auf die elastische Trennwand, was seinerseits zu einer Änderung der Resonanzfrequenz und des Gütefaktors führen wird, an deren Änderungen der Druck in dem zu untersuchenden Medium ermittelt wird.

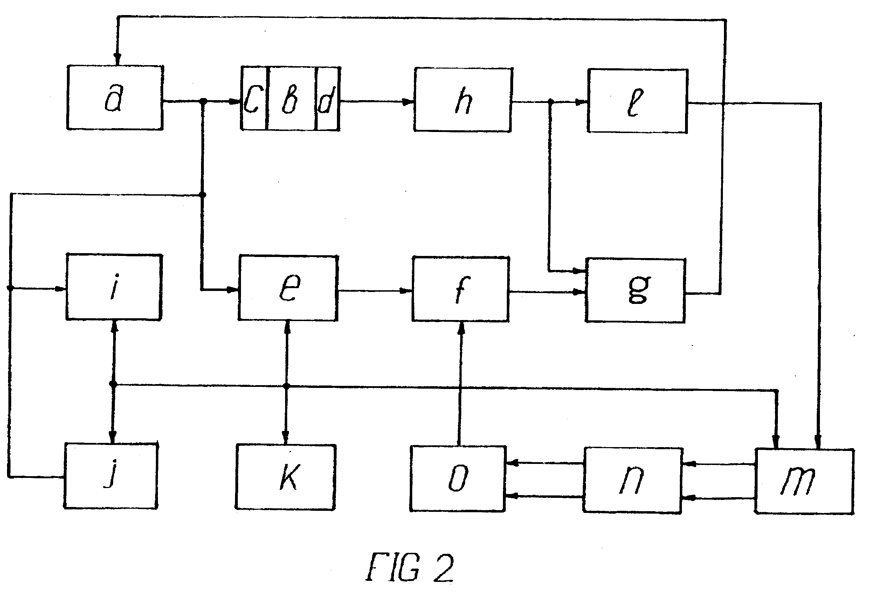

Ein Blockschema der vorliegenden Vorrichtung zu Präzisionsmessungen ist in Fig. 2 angegeben. Das Schema enthält:
einen Sinusspannungsgenerator (a);
eine Flüssigkeitssäule (b), Pos. 3 in Fig. 1;
ein zweifach destilliertes Wasser - im gegebenen Fall zur Bestimmung des Drucks;
einen ausstrahlenden Umwandler (c);
einen Empfangsumwandler (d);
einen diskreten Phasendreher (e);
einen Analogphasendreher (f);
einen Phasendetektor (g);
einen linearen Verstärker (h);
einen Frequenzmesser (i);
einen Frequenzdeviationsmesser (j);
eine Zeitschaltuhr (k);
einen Amplitudendetektor (l);
einen Umschalter (m);

eine Halteschaltung (n);
einen Differentialverstärker (o).

Die Zustandsparameter werden wie folgt ermittelt. Die Hochspannung 6,7 MHz vom Generator a (Fig. 2) speist den ausstrahlenden Umwandler c, mit dessen Hilfe Ultraschallwellen in dem die Vorrichtung füllenden destillierten Wasser erregt werden. Diese Wellen werden in elektrische Schwingungen durch den Empfangsumwandler d umgeformt, durch den linearen Verstärker h verstärkt und kommen an einen der Eingänge des Phasendetektors g. An einen anderen Eingang des Phasendetektors g wird ein Signal vom Generator gegeben, das die Phasendreher e und f passiert hat. Vom Ausgang des Phasendetektors g kommt das Signal, das der Phasendifferenz der Eingangssignale proportional ist, an den steuernden Eingang des Generators a als negatives Rückführungssignal. Die Vorrichtung befindet sich also automatisch in einem Betriebszustand, der der Nullphasendifferenz der Eingangssignale des Phasendetektors g entspricht. Auf Signale der Zeitschaltuhr k mit einer Periode von 1 sec. erzeugt der diskrete Phasendreher e 1/2 gleiche Phasensprünge. Die Amplituden der durch den linearen Verstärker h verstärkten Hochfrequenzspannung, die verschiedenen Zuständen des diskreten Phasendrehers e entspricht, werden durch den Amplitudendetektor l demoduliert und an entsprechenden Eingängen des Differentialverstärkers o mittels des Umschalters m und der Halteschaltung n festgelegt. Der Umschalter m und die Halteschaltung n werden von den Signalen der Zeitschaltuhr k gesteuert. Vom Ausgang des Differentialverstärkers o wird die Spannung als ein negatives Rückführungssignal an den steuernden Eingang des Analogphasendrehers f gegeben. Der letztere wird dermaßen abgestimmt, daß die Eingangsspannung des Differentialverstärkers o gleich O ist. In diesem Fall gleicht der vom Frequenzmesser gemessene arithmetische Mittelwert der Frequenzen, die den zwei Zuständen des diskreten Phasendrehers entsprechen, der Mittenfrequenz $f_n$ der Resonanzspitze der Amplitudenfrequenzkennlinie des Resonators. Es wird eine Abhängigkeit der Größe $f_n$ von dem zu ermittelnden Zustandparameter des Mediums (dem Druck) ermittelt. Man bringt die Vorrichtung in einen Hochdruckbehälter, der im gegebenen Beispiel ein Gaskondensat enthält, in dem es gilt, den Druck zu bestimmen, mißt $f_n$ und ermittelt nach dem Wert dieser Größe den gesuchten Druckwert.

Nachstehend folgt ein Beispiel für die Verwirklichung des vorgeschlagenen Verfahrens für den Fall, wo die magnetische Feldstärke unter Verwendung derselben Vorrichtung (Fig. 1 und 2) zu ermitteln ist. Die Vorrichtung wird mit einer magnetorheologischen Flüssigkeit 3 (Fig. 1) angefüllt. Eine Hochfrequenzspannung vom Generator a (Fig. 2) wird an den ausstrahlenden Umwandler c gegeben, durch welchen die Ultraschallwellen in der magnetorheologischen Flüssigkeit erregt werden. Im weiteren funktioniert das automatische Folgesystem ähnlich der obenbeschriebenen Wirkungsweise und der arithmetische Mitttelwert der den zwei Zuständen des diskreten Phasendrehers e entsprechenden Frequenzen wird am Frequenzmesser i gemessen, er ist der Mittenfrequenz $f_n$ der Resonanzspitze der Amplitudenfrequenzkennlinie gleich. Die den zwei Zuständen des diskreten Phasendrehers f (? - Anm. des Übersetzers) entsprechende Frequenzdifferenz, die am Frequenzdeviationsmesser gemessen wird, ist der Breite der Resonanzspitze $\alpha f_n$ gleich; die letztere ist dem Absorptionskoeffizienten des Ultraschalls im Resonator proportional: $\alpha \lambda / \pi = \delta f_n / f_n = 1/Q$, wo $\lambda$ Wellenlänge, Q Gütefaktor des Resonators und n die Nummer der Resonanzspitze bedeuten.

Die Vorrichtung wird in ein Magnetfeld gebracht, die Reaktion der magnetorheologischen Flüssigkeit auf dessen magnetische Feldstärke P zeigt sich in einer Änderung des Absorptionskoeffizienten des Ultraschalls$\alpha$. Nach der Feststellung eines funktionellen Zusammenhangs zwischen der Absorption $\alpha$ der und der magnetischen Feldstärke wird die Vorrichtung innerhalb der stromführenden Windung gebracht (die Feldstärke des Magnetfeldes in der Mitte der stromführenden Windung H = J/2r, wo J Stromstärke in dem Leiter und r Windungsradius bedeuten), und man ermittelt die magnetische Feldstärke.

Auf ähnliche Weise wird mittels der beschriebenen Vorrichtung die Ultraschallgeschwindigkeit u in dem den Resonator füllenden Medium errechnet, die mit der Frequenz der n-ten Resonanzspitze f wie folgt zusammenhängt: $u = 2lf_n/n$, wo l Länge des akustischen Wegs bedeutet.

Anhand der Abhängigkeit der Ultraschallgeschwindigkeit von dem zu ermitelnden Zustandparameter wird der gesuchte Wert, in dem zu untersuchenden Medium errechnet.

Zu betonen ist, daß eine Erregung elastischer Schwingungen in einem Medium unter Verwendung der vorliegenden Vorrichtung nach Fig. 1 auch aufgrund anderer Schaltungen möglich ist.

Nachstehend ein Beispiel für die Bestimmung der Temperatur einer metallischen Oberfläche mit Hilfe der in Fig. 12 dargestellten Vorrichtung. Die Vorrichtung weist einen piezoelektrischen Umwandler 1, ein Eichmediumelement 3, hergestellt aus Kupfer und einer würmeisolierenden Hülle 2 mit aufgesprühtem Polyurethan, auf. Durch Zufuhr einer Wechselspannung an den piezoelektrischen Umwandler 1 werden im Eichmediumelement 3 Ultraschallschwingungen erregt, und eine Abhängigkeit ihrer Kennlinien (Resonanzfrequenz und Gütefaktor und/oder Durchgangsgeschwindigkeit und Absorption) von der Temperatur ermittelt. Dann wird ein Kontakt des Eichmediumelementes zu der Metalloberfläche gesichert, es werden Schwingungen im Element erneut erregt, und man ermittelt die Temperatur anhand der Kennlinienwerte des Schwingvorgangs.

Mittels der Vorrichtung nach Fig. 1 bestimmt bzw. kontrolliert man gleichzeitig Druck und Temperatur im zu untersuchenden Medium. Zu diesem Zweck füllt man die Zelle im Grundkörper zwischen den Piezokristallen mit einer Flüssigkeit mit drehbar-isomerer Relaxation, erregt in dem gebildeten Eichmediumelement Ultraschallschwingungen und ermittelt anhand der Relaxationsfrequenzverschiebung (errechnet an den Werten des Absorptionskoeffizienten des Ultraschalls) die Temperaturwerte, während an den Werten des Volumelastizitätsmoduls (errechnet an den Werten der Ultraschallgeschwindigkeit) der Druck ermittelt wird.

Falls es erforderlich ist, beispielsweise die elektromotorische Kraft (EMK) des elektromagnetischen Feldes zu errechnen, wird die Vorrichtung mit einer magnetorheologischen (oder elektrorheologischen) Flüssigkeit gefüllt, in der man akustische Schwingungen erregt, und es werden die Resonanzfrequenz und/oder der Gütefaktor bestimmt. Unter der Einwirkung des elektromagnetischen Feldes ändern sich die Orientierung und die Bewegungsart der Magnetpartikel, was zu Änderungen der Resonanzfrequenz und des Gütefaktors führt, und an den Größen dieser Änderungen beurteilt man den EMK-Wert des elektromagnetischen Feldes. Auf ähnliche Weise wird die magnetische Feldstärke ermittelt.

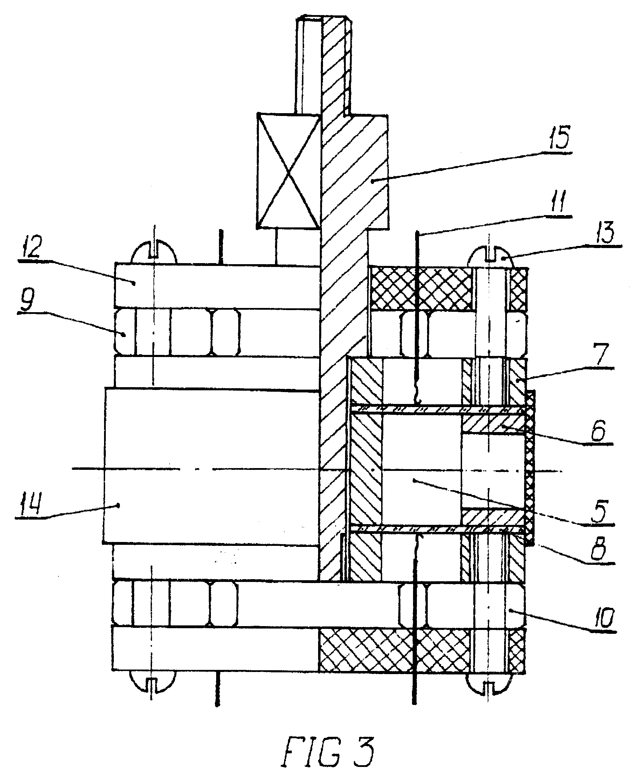

Nachstehend ein Ausführungsbeispiel für das beschriebene Verfahren unter Verwendung der in Fig. 3 dargestellten Vorrichtung. Eine Besonderheit dieser Vorrichtung sind die vier Meßkammern 5, angeordnet in einem gemeinsamen Ganzgehäuse 6. Sie sind identisch und haben gleiche Kenndaten. Die Piezoumwandler 8 der Resonatoren sind an die parallelen Stirnenden des Gehäuses 6 mittels der Platten 7, der Schrauben 10 und der Muttern 9 angedrückt. Zur Vermeidung etwaiger Spielräume im Aufbau der Meßkammer dringen die Schrauben 10 und das Verbindungselement 15 ins Gehäuse 6 und in die Platten 7 in dichter Passung. Die Kontaktelektroden 7 und 11 an den Piezoplatten 8 sind dermaßen ausgeschnitten, daß die Ultraschallwellen nur in Flüssigkeiten erregt werden, die die Meßkammern 5 füllen. Da die Elektroden an für alle Zellen gemeinsamen Piezoplatten ausgeschnitten werden, ist die Resonanzfrequenz der Umwandler in allen Zellen gleich. Gleich ist der Schallreflexionskoeffizient von den Umwandlern ebenfalls. Die elektrischen Signale kommen an die Umwandler durch die an den Platten befestigten Kontaktelektroden 11. Zur Sicherung eines zuverlässigen Kontaktes der Piezoplatten zum Gehäuse der Vorrichtung und einer Möglichkeit, den Resonator zu justieren dienen die Schrauben 13. Die Meßkammern sind vom Außenmedium durch eine hermetische Trennwand 14 isoliert.

Die beschriebene Vorrichtung verwendet man zur Messung von Eigenschaften von Lösungen unterschiedlicher Konzentrationen. Nun ein Beispiel für eine Untersuchung der Konzentrationsabhängigkeit der adiabatischen Verdichtbarkeit von Aminosäure-lösungen vom Druck unter isothermischen Bedingungen. Bei den Messungen werden Aminosäure-präparate der USA-Firma Sigma verwendet. Dabei sind sämtliche Aminosäuren in der L-stereoisomeren Form, ohne Nachreinigung. Die Lösungen werden aus zweifach destilliertem Wasser vor bereitet. Die Lösungskonzentrationen werden an der Trockensubstanz ermittelt. Vorläufig werden die Präparate über $P_2O_5$ getrocknet.

Gemessen wird bei 25,0ºC in folgender Reihenfolge. Die Meßkammern 1 werden mit dem Eichmedium (im gegebenen Fall mit zweimalig destilliertem Wasser) gefüllt.

Solch eine Maßnahme ist unbedingt, denn es reicht nicht aus, nur eine der Meßkammern mit der Eichflüssigkeit zu füllen. Das ermöglicht es jedoch, die erhaltenen Ergebnisse gleichzeitig zu kontrollieren, weil das der Durchführung von vier parallelen Proben praktisch gleichbedeutend ist und Gradienten von Deformationsänderungen in den Meßkammern auszuschließen gestattet.

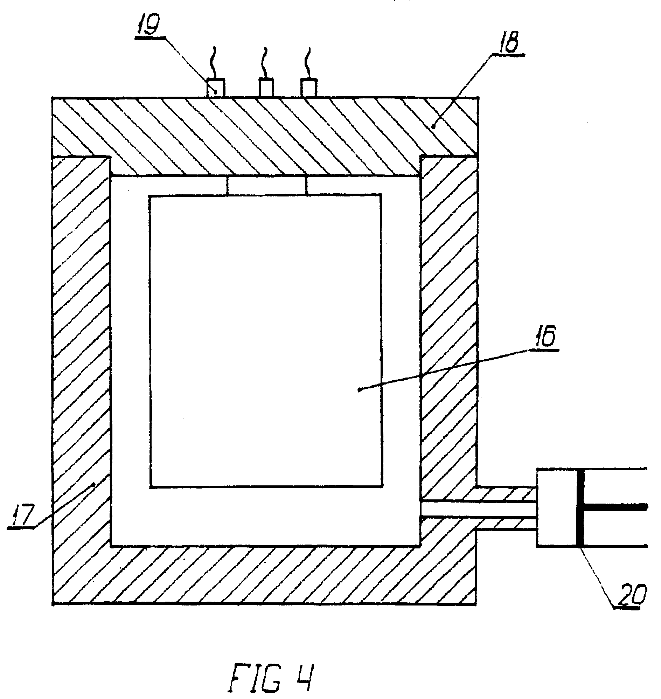

Nach der Füllung der Meßkammern werden sie mit der elastischen Trennwand 14 isoliert und die Vorrichtung (Pos. 16 in Fig. 4) wird in einen Hochdruckbehälter 17 gebracht (Fig. 4). Die Vorrichtung wird am Deckel mittels des Verbindungselementes 15 (Fig. 3) befestigt. Die Kontaktelektroden 11 (Fig. 3) sind über die elektrischen Hochdruckanschlüsse 19 (Fig. 4) im Deckel 18 mit der Kontrollmeßapparatur verbunden. Der Behälter 17 wird mit der den Druck übertragenden Flüssigkeit (Äthanol in unserem Experiment) gefüllt. Dieser Druck wird durch eine Verschiebung des verdichtenden Tauchkolbens 20 aufgebaut. In den Kammern 5 (Fig. 3) werden Schwingungen erregt, und die Kennlinien des Schwingvorganges (in unserem Fall sind es Resonanzfrequenz, Gütefaktor, Ultraschallabsorptionsgeschwindigkeit und -koeffizient, je nach dem Druck bei konstanter Temperatur) werden gemessen. Dann wird die Vorrichtung aus dem Behälter herausgenommen, die Meßkammern werden entleert und mit den zu prüfenden Proben gefüllt, d. h., in einer der Zellen behält man das zu untersuchende Medium bei (zweifach destilliertes Wasser), während die drei anderen mit wäßrigen Lösungen von Glycin (0,2; 0,4; 0,6 Mol/l) gefüllt werden. Vor ihrer Einbringung in die Resonatorkammer werden die Proben vorläufig bei einer Temperatur gelagert, die der Zellentemperatur gleicht (25,0ºC). Die Kammern werden von dem Außenmedium durch eine elastische Trennwand isoliert, und man bringt die Vorrichtung erneut in den Hochdruckbehälter 17 (Fig. 4). Die vollständige Anordnung wird bei 25,0ºC thermostatiert.

Mittels einer Rechenmaschine wird die Bewegungsgeschwindigkeit des Kolbens vorgegeben, und gleichzeitig werden die Anzeigen der drei Meßkammern mit den Lösungen sowie der Meßkammer abgelesen, die destilliertes Wasser enthält. Man ändert den Druck von 0,1 MPa bis 100 MPa und ermittelt ihn mit einer Genauigkeit nicht geringer als 10 Pa. Die Vorrichtung ist für Druckänderungen von etwa 0,05 Pa empfindlich.

Dann wird mit Hilfe derselben Vorrichtung der Druck in Gasen und im Tiefvakuumbereich gemessen. Die Meßkammer mit derselben Eichflüssigkeit (zweimalig destilliertes Wasser) wird in den Behälter 17 gebracht (Fig. 4), aus dem mittels einer Vakuumpumpe die Luft bis auf $0,7 \cdot 10^{-2}$ abgepumpt wird, was man mit Hilfe des anmeldungsgemäßen Verfahrens für Messungen der Gütefaktoren vornimmt.

Zum Vergleich wurde der Druck mittels eines der bekannten Verfahren (SU. A1. 456996) gemessen.

Die Genauigkeit der Druckermittlung betrug 0,8 MPa und die der Ansprechschwelle etwa 0,5 MPa, was um 3 bis 4 Größenordnungen niedriger im Vergleich mit dem vorgeschlagenen Verfahren ist. Darüber hinaus gestattete das bekannte Verfahren nicht, gleichzeitig andere Eigenschaften der Proben zu untersuchen sowie im Vakuum zu messen. Sogar eine Anordnung von vier Vorrichtungen in einem gemeinsamen Hochvakuumbehälter zur Messung nach dem bekannten Verfahren konnte zu keinen gewünschten Ergebnissen führen. Zum Beispiel betrug die Genauigkeit bei einer Untersuchung der Konzentrationsabhängigkeit der Zuwächse des nichtlinearen Parameters von Glycin in wäßriger Lösung etwa 22%, während sie im Falle des vorgeschlagenen Verfahrens rund 0,25% ausmachte.

Das vorgeschlagene Verfahren sichert eine hohe Genauigkeit und Empfindlichkeit und ermöglicht es, optimale Verhältnisse bei der Messung physikalischer Eigenschaften von Medien unter Verwendung von Schwingvorgängen zu erzielen und die Einsatzmöglichkeiten des Verfahrens in einem breiten Bereich der Änderungen der Zustandsparameter zu erweitern, unter anderem von Druckwerten, die dem Tiefvakuum entsprechen $(10^{-3}$ Pa),bis zu Höchstdrücken (etwa $10^9$ Pa und mehr).

Die Realisierung dieses Verfahrens ermöglicht es, Vorrichtungen zur Messung der Zustandsparameter verschiedener Medien zu entwickeln, mit minimalen Abmessungen der Meßkammern (und der Vorrichtungen). Dadurch verringert sich wesentlich ihr Metallaufwand, erhöht sich die Betriebssicherheit bei hohen und höchsten Druckwerten und bietet sich die Möglichkeit, einen Satz Kontrollmeßapparatur bei komplexen Untersuchungen zu verwenden.

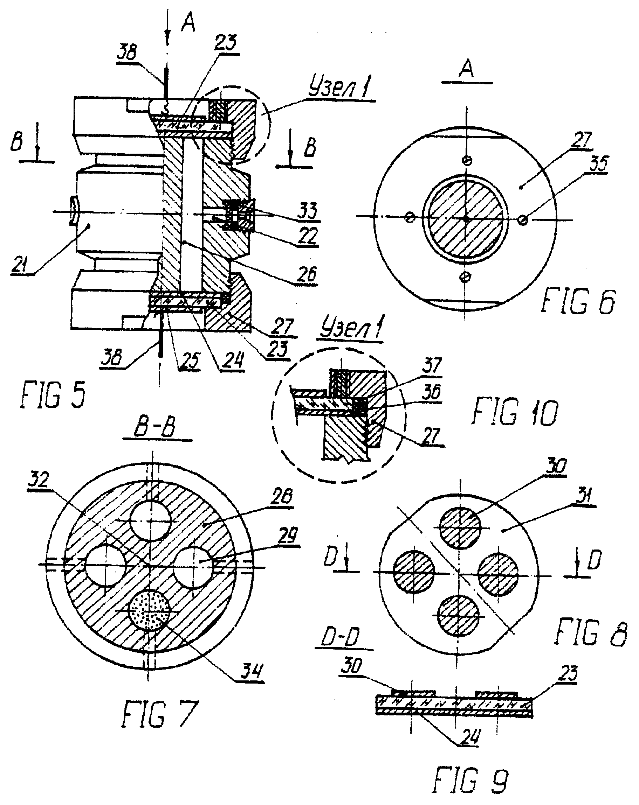

Der Aufbau der Vorrichtung (Fig. 5) weist den Hohlgrundkörper 21 mit der Öffnung 22 in seiner Wand, die an seinen Stirnenden befestigten Umwandler 23 akustischer Schwingungen mit den Elektroden 24 und 25, welche gemeinsam mit dem Grundkörper 21 die Meßkammer 26 bilden, sowie die Befestigungselemente 27 auf. Jeder Umwandler 23 ist starr im Umriß zwischen dem Stirnende des Grundkörpers 23 und dem Befestigungselement 27 befestigt.

Die mit dem zu untersuchenden Medium kontaktierende Oberfläche jedes Umwandlers 23 akustischer Schwingungen ist als eine Ganzelektrode 24 und seine Gegenoberfläche als eine Elektrode 25 gestaltet, koaxial mit der Meßkammer 26 und mit gleichgroßen Durchmessern.

In einer Variante des Grundkörpers 28 sind vier Meßkammern 29 angeordnet, ihre Elektroden 30 sind an dem gemeinsamen Umwandler akustischer Schwingungen 31 ausgebildet (Fig. 8 - 9).

Dabei sind die Meßkammern 29 symmetrisch zur Längsachse 32 des Grundkörpers 28 angeordnet.

Die Meßkammern sind vom Außenmedium durch die elastische Trennwand 33 isoliert (Fig. 5).

Dabei ist eine der Meßkammern 34 mit einem Eichmedium gefüllt.

In jedem Befestigungselement 27 sind Justierschrauben 35 symmetrisch im Umkreis angeordnet (Fig. 6).

Im Perimeter jedes Umwandlers akustischer Schwingungen 23 gibt es einen Verdichtungsring 36 und einer Andruckring 37 (Fig. 10).

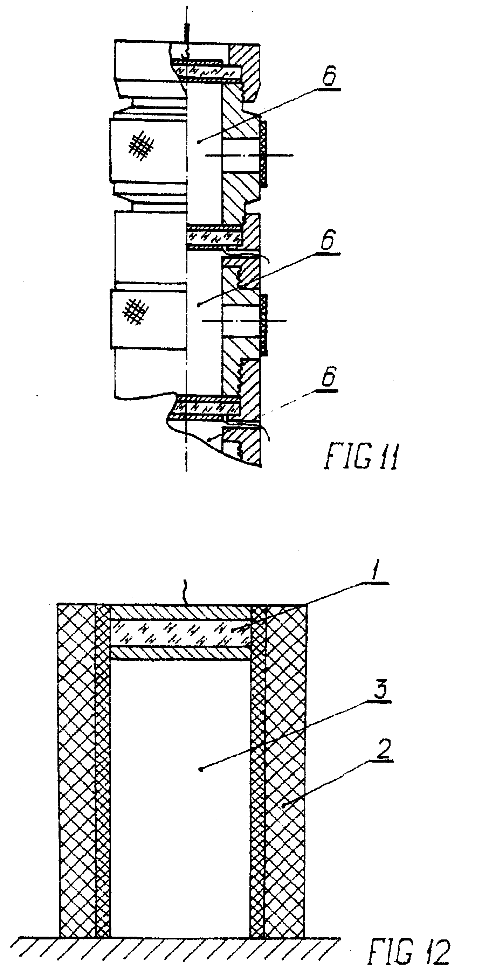

Die Meßkammern 6 sind hintereinander auf einer Linie angeordnet (Fig. 11).

Die Vorrichtung kann in einen Autoklav eingebracht werden.

Die Vorrichtung funktioniert wie folgt. Die Elektroden 38 an den Umwandlern akustischer Schwingungen werden an einen Meßblock (nicht dargestellt) angeschlossen, die Meßkammer 26 wird mit dem zu untersuchenden Medium gefüllt, gegebenenfalls vom Außenmedium durch die elastische Trennwand 33 isoliert. Dann werden akustische Kennlinien des Mediums gemessen.

Im Falle etwaiger Verzerrungen der Amplitudenfrequenzkennlinien der Signale werden die Umwandler akustischer Schwingungen 23 mittels der Schrauben 35 nachreguliert.

Zu den Messungen unter hohen Druckwerten wird die Vorrichtung in einen Autoklav gebracht.

Ausführungsbeispiel der Vorrichtung. Als Umwandler akustischer Schwingungen dienen Platten, hergestellt aus einem Lithiumniobat-Monokristall. Die Elektroden wurden auf den entgegengesetzten Flächen durch Vakuumaufsprühen von Gold auf ihnen hergestellt. Der Grundkörper und die Befestigungselemente sind aus Titan hergestellt.

Die Elektroden an den Piezoplatten sind aus Gold, wie in Fig. 5 dargestellt, von der auf das zu untersuchende Medium beladenen Seite auf dem ganzen Stirnende, hergestellt, und auf der entgegengesetzten Seite stimmen sie mit den Durchmessern der Öffnungen in dem Grundkörper überein. Nachstehend ist ein Fall beschrieben, wo eine Konzentrationsabhängigkeit wäßriger Salzlösungen (NaCl) untersucht wird. Eine der Meßkammern wird mit der Eichflüssigkeit (destilliertes Wasser), und die übrigen drei Kammern werden mit wäßrigen Lösungen verschiedener Konzentrationen gefüllt. Vor dem Eingießen der Probe wird die Meßkammer mit destilliertem Wasser gründlich gewaschen und getrocknet.

Nach der Füllung werden die Meßkammern vom Außenmedium mittels eines hermetisierenden Gummirings isoliert (Fig. 11).

In jedem Befestigungselement sind die Justierschrauben (35) symmetrisch zur Längsachse des Grundkörpers (6) angeordnet.

Die Vorrichtung wird in einen Autoklav und/oder in einen Thermostat gebracht. Durch ein System von Durchführungen wird ein elektrisches Signal im Frequenzbereich von 6 bis 8 MHz an die Umwandler gegeben, und die Messungen beginnen.

Zur Messung unter hohen Druckwerten ist es zweckmäßiger, eine Reihenanordnung der Kammern auf einer Linie (Fig. 11) zu benutzen. In solch einem Fall sind sämtliche Arbeitsgänge den obenbeschriebenen ähnlich. Zur Sicherung einer zuverlässigen Arbeitsweise bei Druckwerten von 1000 MPa muß das Verhältnis des Außendurchmessers des Hochdruckbehälters zum Innendurchmesser etwa 4:1 oder 3:1 betragen.

Die Identität der Meßkammern und die Gleichheit ihrer Temperatur- und Druckbetriebsweisen ermöglichen es, die Anforderungen an die Thermostatierung bei differentialen Messungen sehr bedeutend zu senken. Um eine relative Genauigkeit der Messungen der Geschwindigkeit $10^{-4}$ % in einer wäßrigen Lösung bei 25°C zu sichern, wäre eine Thermostabilität der Resonatorkammer von $6 \cdot 10^{-4}$ °C erforderlich. Bei Verwendung der Differentialmethode der Messung wird die Aufgabe rapide einfacher. Bei gleichen Temperatur- und Druckverhältnissen der Meßkammern und ihrer Identität wird die Frequenzdifferenz zwischen den frequenznächsten Oberschwingungen zweier Resonatoren gemessen, wobei in einer von ihnen das zu untersuchende Medium und in der anderen eine Eichlösung mit einem nahen Temperaturkoeffizienten der Geschwindigkeit eingebracht wurden. Dadurch wird es möglich, die Anforderungen an die absolute Thermostabilität bis auf 0,05ºC zu senken, was sich leicht mittels üblicher Laborthermostatenerzielen läßt.

Die Vorrichtung bietet viel breitere funktionelle Einsatzmöglichkeiten und eine höhere Genauigkeit in breiten Druck- und Temperaturbereichen. Die vorgeschlagene Vorrichtung ermöglicht es, im Druckbereich 0,1 ÷ 1000 MPa Fehler relativer Messungen der Schallgeschwindigkeit von ∓ $5 \cdot 10^{-6}$ und des Schluckungskoeffizienten Fehler von $4 \cdot 10^{-3}$ zu erzielen.

Ein Versuchsmuster der Vorrichtung ist realisiert und findet in der Praxis der Messungen akustischer Kennwerte von Flüssigkeiten (Wasser und wäßrige Lösungen von Salzen, Eiweißen, Aminosäuren, Gaskondensaten, Brenn-bzw. Kraftstoffen u.a.m.) Verwendung.

Industrielle Verwendbarkeit. Die vorliegende Erfindung wird in der Praxis der Messungen akustischer Kennwerte von Wasser und wäßrigen Lösungen von Salzen, Eiweißstoffen und anderen Flüssigkeiten Verwendung finden, die in Erdöl- und Gasindustrie, Erdölchemie-und Chemieindustrie sowie in Medizin, Biologie und anderen Bereichen gebraucht werden.

**Patentansprüche**

1. Verfahren zur Bestimmung physikalischer Zustandsparameter von Medien durch das Erregen von Schwingungen in dem zu messenden Medium, das Messen der Kennlinien des Schwingvorganges und das Ermitteln auf deren Grundlage der Größe des zu ermittelnden Parameters, dadurch gekennzeichnet, daß die Schwingungen in einem Eichmediumelement erregt werden, eine Abhängigkeit mindestens einer der Kennlinien des Schwingvorganges von dem zu ermittelnden Parameter ermittelt wird, ein Kontakt des Eichmediumelementes zu dem zu untersuchenden Medium gesichert wird, in dem Element erneute Schwingungen erregt werden, während die Größe des gesuchten Zustandparameters des zu untersuchenden Mediums anhand der Änderung der Kennlinie des Schwingvorganges in dem Eichmediumelement festgestellt wird.

2. Verfahren nach Anspruch 1, dadurch gekennzeichnet, daß modulierte Schwingungen erregt werden.

3. Verfahren nach Anspruch 1, dadurch gekennzeichnet, daß als zu messende Kennlinien des Schwingvorganges die Resonanzfrequenz und/oder der Gütefaktor verwendet werden.

4. Verfahren nach Anspruch 1, dadurch gekennzeichnet, daß als zu messende Kennlinien des Schwingvorganges der Durchgangs- und/oder der Schluckungskoeffizient der Schwingungen verwendet werden.

5. Verfahren nach Anspruch 1, dadurch gekennzeichnet, daß man die Relaxationsfrequenz des Eichmediums ermittelt und die Zustandparameter des zu untersuchenden Mediums anhand der Verschiebung der Relaxationsfrequenz ermittelt.

6. Verfahren nach Ansprüchen 1, 2, dadurch gekennzeichnet, daß im Eichmediumelement Ultraschallschwingungen erregt werden.

7. Verfahren nach Ansprüchen 1, 2, dadurch gekennzeichnet, daß im Eichmediumelement Hyperschallschwingungen erregt werden.

8. Verfahren nach Anspruch 1, dadurch gekennzeichnet, daß man als Eichmedium ein flüssiges Medium verwendet, das seinen Parametern nach dem zu untersuchenden Medium entspricht.

9. Verfahren nach Anspruch 1, dadurch gekennzeichnet, daß man als Eichmedium ein magnetorheologisches Medium verwendet.

10. Verfahren nach Anspruch 1, dadurch gekennzeichnet, daß man als Eichmedium ein elektrorheologisches Medium verwendet.

11. Verfahren nach Anspruch 1, dadurch gekennzeichnet, daß das Eichmedium mit einer linearen Abhängigkeit der Schallfortpflanzungsgeschwindigkeit von der Temperatur ausgewählt und/oder modelliert wird.

12. Verfahren nach Anspruch 1, dadurch gekennzeichnet, daß das Eichmedium mit einer linearen Abhängigkeit des Elastizitätsmoduls vom Druck ausgewählt und/oder modelliert wird.

13. Vorrichtung zur Durchführung des Verfahrens nach Anspruch 1, die einen Grundkörper bzw. ein Gehäuse (21) mit einer Öffnung (22) in dessen Wand, eine in dem Grundkörper angeordnete Meßkammer (26), mittels Befestigungselementen an den Stirnenden des Grundkörpers befestigte Umwandler (23) akustischer Schwingungen mit Elektroden aufweist, dadurch gekennzeichnet, daß die Umwandler (23) im Umriß an den Stirnenden des Grundkörpers starr befestigt sind, mindestens zwei Elektroden der Umwandler (24), die zum Hohlraum des Grundkörpers gerichtet sind, im Perimeter des Grundkörpers befestigt sind, während die übrigen Elektroden am Umwandler koaxial mit der Meßkammer angeordnet sind und mit ihr nach dem Durchmesser zusammenfallen.

14. Vorrichtung nach Anspruch 13, dadurch gekennzeichnet, daß sie zusätzlich mit im Grundkörper zu seiner Längsachse parallel angeordneten Meßkammern versehen ist, wobei im Grundkörper n Öffnungen zusätzlich ausgebildet sind, die mit den Hohlräumen dieser Kammern in Verbindung stehen.

15. Vorrichtung nach Ansprüchen 13, 14, dadurch gekennzeichnet, daß die Meßkammern symmetrisch zu der Längsachse des Grundkörpers angeordnet sind.

16. Vorrichtung nach Ansprüchen 13 - 15, dadurch gekennzeichnet, daß sie mit elastischen isolierenden Trennwänden (33) in Öffnungen der Grundkörperwand gemäß der Anzahl der Kanäle versehen sind.

17. Vorrichtung nach Ansprüchen 13 - 15, dadurch gekennzeichnet, daß sie in jedem der Befestigungselemente mit Justierschrauben (35) versehen ist, die symmetrisch zu der Längsachse des Grundkörpers (21) angeordnet sind.

18. Vorrichtung nach Ansprüchen 13 - 15, dadurch gekennzeichnet,daß sie mit einem Verdichtungsring (36) und einem Andruckring (37) gemäß der Anzahl der Umwandler versehen ist, die im Perimeter jedes von ihnen angeordnet sind.

FIG 1

FIG 2

FIG 3

FIG 4

FIG 5

FIG 6

FIG 7

FIG 8

FIG 9

FIG 10

Узел 1

B-B

D-D

FIG 11

FIG 12

# INTERNATIONAL SEARCH REPORT

International Application No PCT/SU 91/00171

| I. CLASSIFICATION OF SUBJECT MATTER (if several classification symbols apply, indicate all) * |
|---|
| According to International Patent Classification (IPC) or to both National Classification and IPC |

IPC$^5$    G 01 N 29/00; G 01 L 9/08

| II. FIELDS SEARCHED |
|---|

**Minimum Documentation Searched** [7]

| Classification System | Classification Symbols |
|---|---|
| IPC$^5$ | G 01 N 29/00; G 01 L 9/08 |

**Documentation Searched other than Minimum Documentation
to the Extent that such Documents are Included in the Fields Searched** [8]

| III. DOCUMENTS CONSIDERED TO BE RELEVANT [9] | | |
|---|---|---|
| Category * | Citation of Document, [11] with indication, where appropriate, of the relevant passages [12] | Relevant to Claim No. [13] |
| A | US, A, 4907453 (PEN KEM, INC.) 13 March 1990 (13.03.90), figure 2 | 13 |
| A | SU, A1, 994975 (Fiziko-tekhnichesky institut AN Turkmenskoi SSR) 7 February 1983 (07.02.83), the claims | 17 |
| A | SU, A1, 1026050 (Proektno-tekhnologichesky institut "ENERGOMONTAZHPROEKT" 30 June 1983 (30.06.83), claim 1 | 16,18 |
| A | GB, A, 2149109 (LABORATOIRE SUISSE DE RECHERCHES HORLOGERES), 5 June 1985 (05.06.85) | 14 |
| A | US, A, 4763513 (NUSONICS, INC.) 16 August 1988 (16.08.88), the abstract, figure 1, column 5,6, pages 55-65 | 14 |

.../...

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

| IV. CERTIFICATION | |
|---|---|
| Date of the Actual Completion of the International Search | Date of Mailing of this International Search Report |
| 05 October 1991 (05.10.91) | 29 November 1991 (29.11.91) |
| International Searching Authority | Signature of Authorized Officer |
| ISA/SU | |

Form PCT/ISA/210 (second sheet) (January 1985)